# DEMANDE DE BREVET EUROPEEN

(11) **EP 1 457 374 A2**
(43) Date de publication de la demande: **15.09.2004**
(21) Numéro de dépôt: 04300093.4
(22) Date de dépôt: 20.02.2004
(51) Int. Cl.: B60J 7/10

(54) **Dispositif pour tendre une bâche et véhicule industriel équipé d'un tel dispositif**

(30) Priorité: 20.02.2003 FR 0350030
(71) Demandeur: General Trailers France, 91130 Ris Orangis (FR)
(72) Inventeur: Lafont, Jean-François, 89560 Chastenay (FR)
(74) Mandataire: Catherine, Alain

(57) **Abrégé**

L'invention concerne un dispositif pour tendre une bâche d'un véhicule industriel ainsi qu'un véhicule industriel comportant un tel dispositif.

Selon l'invention, le dispositif comprend une platine (1) destinée à la fixation du dispositif sur la carrosserie, un système d'entraînement (2) comportant une chape (21) fixée sur la platine (1), un moyen de réception et d'entraînement (22) de la barre de tension (B) supporté à rotation par la chape (21), une poignée de manoeuvre (4) reliée au moyen de réception et d'entraînement (22) de la barre de tension (B) et des moyens de blocage (3, 5) fixé sur la platine (1) et permettant de bloquer le moyen de réception et d'entraînement (22) de la barre de tension (B) dans au moins une position, la poignée (4) pouvant être manoeuvrée de façon à faire pivoter conjointement le moyen de réception et d'entraînement (22) et la barre de tension (B), lorsque ceux-ci sont engagés l'un dans l'autre, depuis une première position correspondant à la bâche détendue jusqu'à une seconde position correspondant à une tension maximale de la bâche et vice versa.

## Description

L'invention concerne un dispositif pour tendre une bâche d'un véhicule industriel comportant une carrosserie ainsi qu'un véhicule industriel comportant un tel dispositif.

Sur des véhicules industriels ayant une carrosserie dite "à parois souples", les parois sont constituées par des bâches. L'utilisation de bâches, par opposition à l'utilisation de parois rigides munis d'une porte, permet d'accéder plus facilement à l'intérieur de la carrosserie et de charger et de décharger ainsi le véhicule à la fois plus facilement et plus rapidement. En effet, alors que l'on accède à l'intérieur d'un fourgon en général uniquement par l'arrière du véhicule où se trouve le plus souvent la seule grande porte d'une carrosserie à parois rigides, on peut accéder à l'intérieur d'un véhicule à parois souples par chacun des côtés sur lequel la paroi est constituée par une bâche.

Les parois souples d'un véhicule industriel sont en général formées par une bâche individuelle pour chacun des côtés concernés. Ainsi, les véhicules industriels auxquels s'applique la présente invention, à savoir les camions-porteurs, les remorques, les semi-remorques et tout autre véhicule industriel se déplaçant sur une route ou sur des rails et ayant une carrosserie à parois souples, ont le plus souvent une carrosserie selon l'une ou l'autre des conceptions suivantes:
- la carrosserie a la forme d'une caisse ouverte vers le haut; en ce cas, la bâche constitue la paroi supérieure, également appelée le toit de la carrosserie; le toit de la carrosserie est alors ouvert et fermé respectivement par enroulement de la bâche autour d'une barre et par déroulement de celle-ci, ou par une disposition coulissante selon laquelle la bâche est pliée en zigzag lors de l'ouverture du toit et dépliée lors de la fermeture du toit;
- la carrosserie comprend un toit rigide ou un toit constitué par une bâche non ouvrante et au moins une de ses deux parois latérales et/ou la paroi arrière est constitué par une bâche ; en ce cas, la ou les bâches sont montées, essentiellement en fonction des dimensions de la carrosserie, soit sous la forme d'un rideau coulissant horizontalement, soit de façon à pouvoir être enroulée autour d'une barre horizontale et en être déroulée.

Il est toutefois également concevable qu'un véhicule à parois souples soit équipé d'une bâche formant deux parois souples adjacentes, par exemple le toit et une paroi latérale.

Quelle que soit la conception choisie, les bâches sont en général tendues moyennant des sangles ou des sandows tirés et fixés un à un sur la carrosserie. Et pour détendre la bâche ensuite, les sangles ou les sandows sont détachés et lâchés l'un après l'autre.

Par ailleurs, les matériaux et les moyens de fabrication actuels permettent de former des carrosseries de véhicules industriels d'une manière telle que les dimensions maximales, notamment la largeur et la longueur extérieures maximales, autorisées par la réglementation internationale, soient exploitées au maximum et que l'espace intérieur soit le plus grand possible. Il en résulte que l'épaisseur d'une paroi latérale, par exemple, n'est que de l'ordre de 35 mm. Et puisque les faces extérieures des parois latérales constituent les parties les plus avancées respectivement dans le sens de la longueur et dans le sens de la largeur du véhicule industriel, aucune pièce ni aucun dispositif monté sur l'extérieur de la carrosserie ne doit alors dépasser de ces surfaces extérieures.

Le but de l'invention est alors de proposer un dispositif pour tendre et détendre une bâche d'un véhicule industriel, qui est simple à manipuler et présente un faible encombrement.

Le but de l'invention est atteint avec un dispositif pour tendre une bâche d'un véhicule industriel comportant une carrosserie, la bâche ayant deux bords parallèles opposés dont au moins un est pourvu d'une barre de tension, et le dispositif comprenant une platine destinée à la fixation du dispositif sur la carrosserie, un système d'entraînement comportant une chape fixée sur la platine, un moyen de réception et d'entraînement de la barre de tension supporté à rotation par la chape et ayant une première partie d'extrémité destinée à être engagée avec la barre de tension et une seconde partie d'extrémité, opposée à la première partie d'extrémité, une poignée de manoeuvre reliée à la seconde partie d'extrémité du moyen de réception de la barre de tension et un moyen de blocage fixé sur la platine et permettant de bloquer le moyen de réception de la barre de tension dans au moins une position.

Selon cette conception du dispositif de l'invention, la poignée peut être manoeuvrée de façon à faire pivoter conjointement le moyen de réception et d'entraînement et la barre de tension, lorsque ceux-ci sont engagés l'un dans l'autre, depuis une première position dans laquelle la bâche est détendue, jusqu'à une seconde position dans laquelle une tension maximale est appliquée à la bâche, et vice-versa. La poignée de manoeuvre fait partie intégrante du dispositif, elle reste donc en permanence reliée au moyen de réception.

De plus, le moyen de réception et d'entraînement de la barre de tension peut être bloquée directement par le moyen de blocage fixé sur la platine, ou indirectement lorsque le moyen de blocage fixé sur la platine agit sur la poignée de manoeuvre, au moins dans sa seconde position, c'est-à-dire lorsque la bâche est tendue.

Selon une variante de réalisation, le moyen de blocage fixé sur la platine peut être formé de façon à bloquer le moyen de réception et d'entraînement aussi dans la première position pour faciliter l'engagement de la barre de tension avec le moyen de réception et d'entraînement.

Le dispositif de l'invention s'applique à tout type de véhicule industriel comportant une carrosserie à parois souples et à tout type de montage d'une bâche et quelle que soit la paroi qui est couverte par la bâche à tendre.

Ainsi, le dispositif de l'invention peut être monté dans un profilé horizontal définissant le toit de la carrosserie lorsque le dispositif doit tendre la bâche formant la paroi supérieure de la carrosserie. De manière analogue, le dispositif de l'invention peut être monté dans un profilé horizontal formant un bord de rive lorsque la bâche formant une paroi latérale ou arrière est enroulée/déroulée autour d'une barre horizontale, et il peut être intégré dans un des profilés verticaux formant un des quatre montants angulaires de la carrosserie lorsque la bâche forme une paroi latérale entière ou la paroi arrière entière. Selon encore une autre application, le dispositif de l'invention peut être monté dans un montant intermédiaire d'une carrosserie lorsque la bâche concernée ne constitue qu'une partie de la paroi latérale et est suspendue sous la forme d'un rideau coulissant, l'autre partie de cette paroi étant alors une paroi rigide ou formée par une bâche destinée à rester en demeure.

Selon encore une autre application du dispositif de l'invention, la carrosserie d'un véhicule industriel peut être aménagé de façon que la bâche formant une paroi souple soit tendue par deux dispositifs de l'invention, c'est-à-dire par un à chacun de ses deux côtés verticaux opposés. Une telle configuration permet d'ouvrir la paroi par un côté comme par l'autre en bénéficiant de la facilité de manoeuvre du dispositif.

Le dispositif de l'invention peut également avoir l'une au moins des caractéristiques ci-après, considérées isolément ou selon toutes leurs combinaisons techniquement possibles:
- la poignée de manoeuvre est reliée au moyen de réception et d'entraînement par une articulation;
- la poignée de manoeuvre est pourvue d'un moyen d'arrêt tel un crochet conformé de façon que la poignée de manoeuvre puisse coopérer avec le moyen de blocage de façon à bloquer le moyen de réception et d'entraînement dans sa seconde position;
- la poignée de manoeuvre est pourvue d'un orifice disposé de façon que, lorsque l'on passe une goupille par cet orifice et un orifice pratiqué sur une partie correspondante de la platine, la poignée de manoeuvre est immobilisée de façon à bloquer le moyen de réception et d'entraînement dans sa seconde position;
- la poignée de manoeuvre est pourvue d'un perçage par lequel peut être passé un câble de scellement;
- sur la poignée de manoeuvre, l'orifice pour une goupille ou le perçage pour le câble de scellement, ou les deux, sont disposés sur une partie en saillie ou sur une partie rapportée de la poignée;
- la poignée de manoeuvre est formée en deux parties, dont une partie est amovible;
- la platine est formée de façon à pouvoir être enchâssée dans une partie appropriée d'un montant ou d'un autre profilé de la carrosserie;
- la platine est pourvue d'au moins un orifice permettant sa fixation sur la carrosserie;
- le moyen de réception et d'entraînement destiné à recevoir une barre de tension attachée à, ou enfilée dans, un bord correspondant de la bâche à tendre comprend une pièce allongée ayant au moins partiellement une section transversale carrée;
- le moyen de blocage est constitué sous la forme d'un verrou formé par une pièce montée basculant ou pivotant autour d'un axe et agissant sous la contrainte d'un ressort.

D'autres caractéristiques et avantages de l'invention ressortiront de la description ci-après d'un exemple de réalisation, faite en référence aux dessins.

Dans ces dessins:
la figure 1 montre la paroi avant d'un véhicule industriel et l'emplacement du dispositif de l'invention dans un des deux montants de cette paroi avant;
la figure 2 montre un premier mode de réalisation du dispositif de l'invention ;
les figures 3 à 7 montrent les principales positions de la poignée de manoeuvre et du moyen de réception du dispositif de l'invention pour tendre et détendre une bâche,
la figure 8 représente une variante de la platine du dispositif de l'invention ;
la figure 9 représente un second mode de réalisation du dispositif de l'invention ;
les figures 10 et 11 représentent des variantes du moyen de réception et d'entraînement du dispositif de l'invention ; et

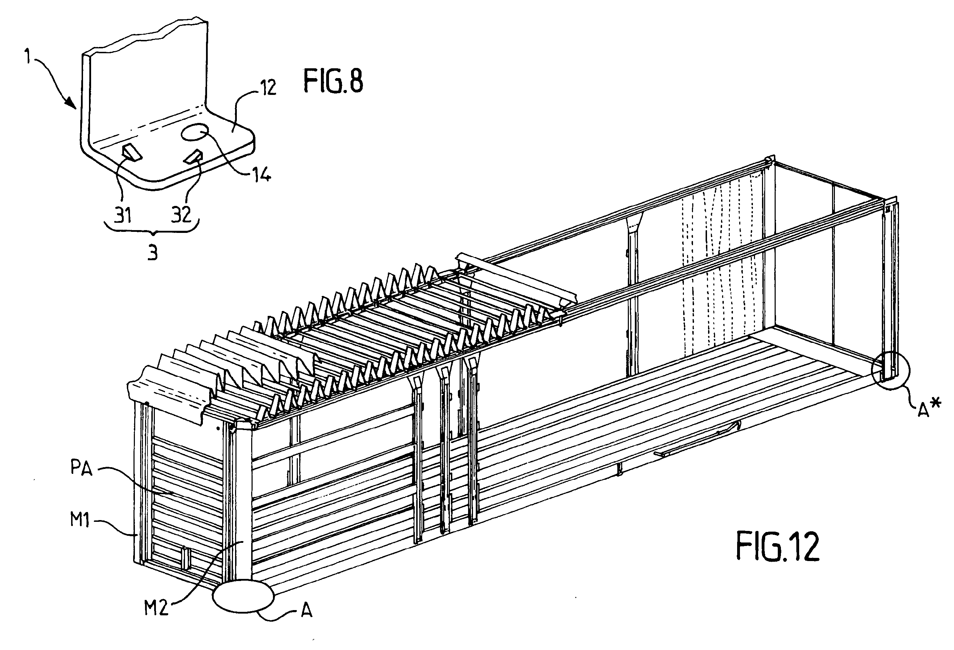

la figure 12 montre schématiquement un véhicule industriel équipé de deux dispositifs de l'invention.

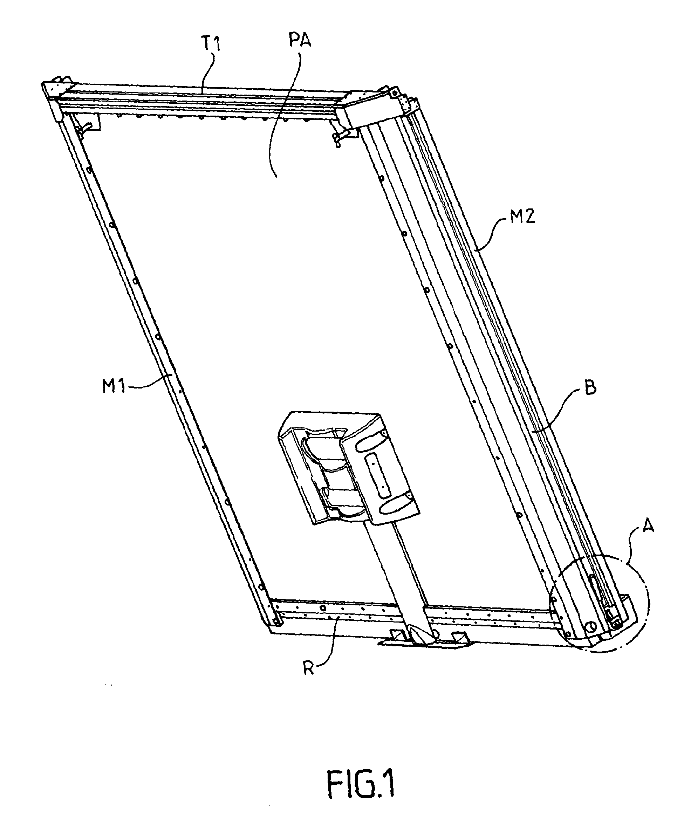

La figure 1 montre une paroi avant PA d'un véhicule industriel, paroi qui s'étend entre deux profilés verticaux constituant respectivement un montant avant droit M1 et un montant avant gauche M2 de la carrosserie, une traverse T1 limitant la paroi avant par le haut et le bord R correspondant d'un plancher non représenté sur lequel la paroi avant est montée.

Les désignations d'orientation ci-avant et dans la suite de la description, à savoir droite et gauche, avant et arrière, haut et bas, se réfèrent à la carrosserie d'un véhicule industriel normalement stationné sur un sol et par rapport au sens de la marche avant de ce véhicule. De plus, l'exemple de réalisation choisi pour la description correspond à l'application selon laquelle la bâche est suspendue sur un rail supérieur et est mue par coulissement dans ce rail. Le bord de la bâche par lequel la bâche est tendue est pourvu d'une barre de tension B destinée à être reliée à, et manoeuvrée par, un dispositif de l'invention disposé en bas du montant M2, l'emplacement étant signalé par un cercle A.

Il est rappelé, toutefois, que le dispositif de l'invention peut aussi bien être utilisé pour tendre une bâche horizontale, auquel cas le dispositif de l'invention serait logé, par exemple, dans la traverse T1 et que le véhicule industriel peut être équipé de plusieurs dispositifs de l'invention afin que deux ou plusieurs des bâches avec le véhicule est équipé, puissent être tendues chacune par un ou deux dispositifs selon l'invention.

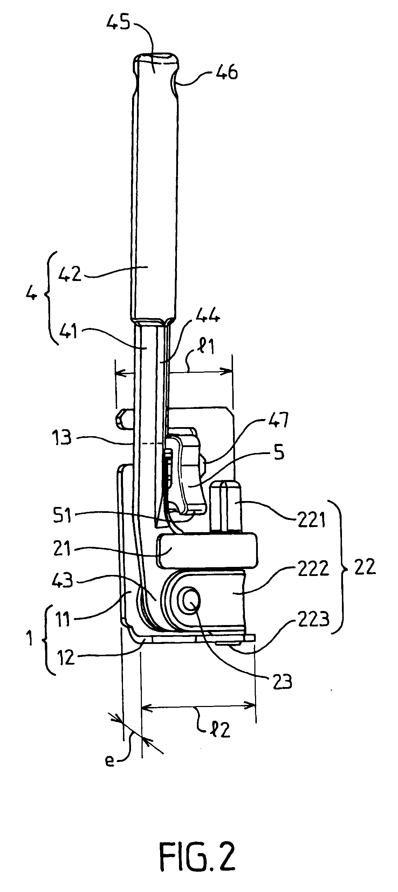

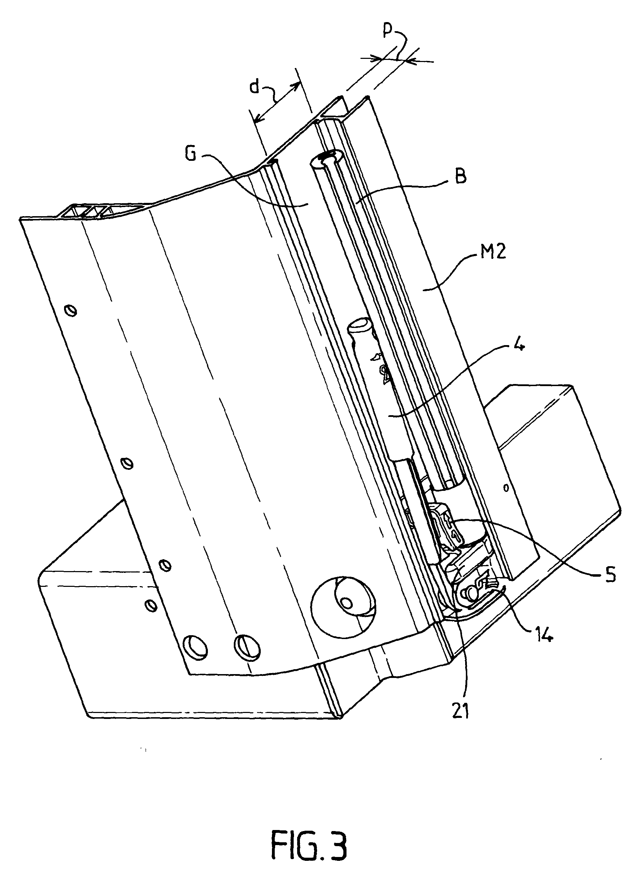

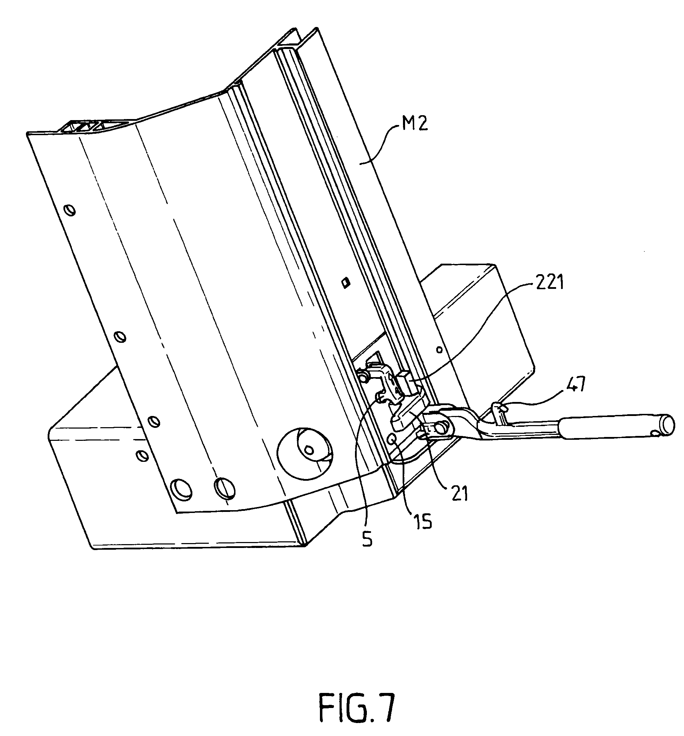

La figure 2 montre un premier mode de réalisation du dispositif selon l'invention en détail. Sa manipulation est représentée sur les figures 3 à 7 en les étapes les plus importantes lors d'une manoeuvre ayant pour but de détendre une bâche. L'ordre inverse de ces étapes, donc la suite des figures 7 à 3, correspond à une manoeuvre pour tendre une bâche.

Le dispositif selon l'invention comprend une platine 1 destinée à la fixation du dispositif sur la carrosserie d'un véhicule industriel, un système d'entraînement 2 pour recevoir et faire tourner la barre de tension B d'une bâche, des moyens de blocage 3 permettant de bloquer le système d'entraînement 2 au moins dans la position correspondant à la tension maximale de la bâche, une poignée de manoeuvre 4 et un moyen d'arrêt 5 de la poignée de manoeuvre 4 dans une position de rangement.

La platine 1, par laquelle le dispositif est fixé par exemple dans une partie en retrait du profilé constituant le montant M2, comme cela est représenté sur la figure 3, comprend une première partie plane 11 et une seconde partie plane 12, perpendiculaire à la première partie 11. Les dimensions de la platine 1 sont choisies en fonction du mode de fixation du dispositif de l'invention sur la carrosserie. Selon le mode de réalisation représenté sur les figures, qui permet de tirer le meilleur profit de la conception du dispositif de l'invention, la largeur 11 de la platine est choisie en fonction de la largeur d d'une glissière G formée dans le profil du montant M2, dans laquelle la platine 1 est glissée lors de la fixation du dispositif de l'invention sur la carrosserie. La hauteur de la partie 11 de la platine 1 est choisie librement selon des critères de conception du dispositif. La partie 11 est pourvu d'au moins un trou 15 destiné à être traversé par une vis moyennant laquelle la platine 1 est bloquée en translation. Avantageusement, la vis est engagée dans un trou de la carrosserie qui, par exemple, sert aussi à la fixation latérale de la paroi avant.

Lorsque la platine est montée sur la carrosserie sans être tenue par une glissière, il peut être nécessaire de fixer la platine par deux vis. Selon une variante, la platine est soudée sur la carrosserie.

Les dimensions de la seconde partie 12 de la platine 1, à savoir sa largeur l2 et sa profondeur e, sont choisies en fonction des dimensions du montant M2 et notamment de la profondeur p de la partie du montant M2 constituant une des deux extrémités de la paroi entre lesquelles la bâche s'étend, et le cas échéant de la largeur de la glissière formée dans le profilé M2.

Les dimensions des autres pièces du dispositif de l'invention sont également choisies de façon que le dispositif de l'invention puisse être intégré dans un profilé de la carrosserie du véhicule.

Grâce à cette conception, le dispositif de l'invention ne crée pas de largeur supplémentaire pour le véhicule, puisqu'il ne dépasse pas de la carrosserie du véhicule, et ne constitue pas non plus un danger, par exemple par frottement, pour des câbles et tubulures éventuellement fixés sur la paroi avant du véhicule industriel.

Le système d'entraînement 2 du dispositif comprend une chape d'entraînement 21 fixée sur la platine 1 et un moyen de réception et d'entraînement 22 de la barre de tension B, supporté à rotation par la chape 21. Le moyen 22 est formé de manière à présenter une première partie d'extrémité 221 destinée à être reliée, de façon amovible, à la barre de tension B et une seconde partie d'extrémité 222 opposée à la première partie 221 et destinée à recevoir la poignée de manoeuvre 4. Avantageusement, la première partie d'extrémité est formée avec une section transversale carrée ou hexagonale et la seconde partie d'extrémité 222 est prolongée par une partie 223 disposée dans l'axe de rotation du moyen 22 et destinée à être logée dans un évidement correspondant 14, pratiqué dans la seconde partie 12 de la platine 1, pour reprendre une partie des forces agissant sur le moyen 22 lors de sa rotation.

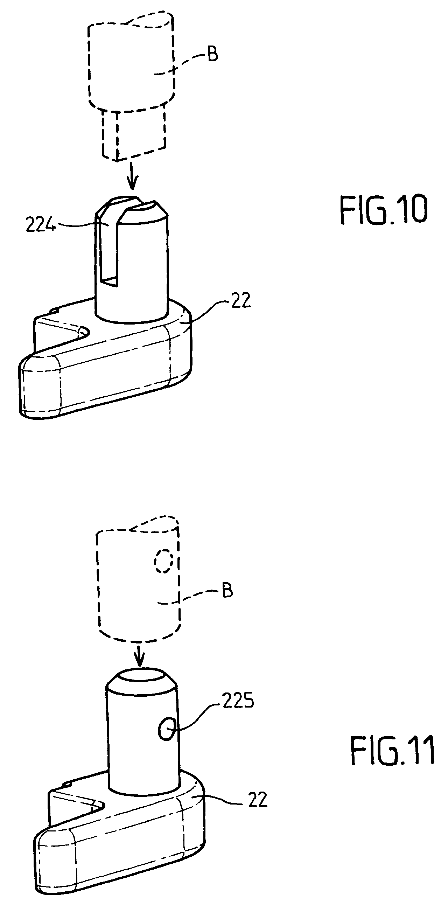

Selon une première variante de réalisation, le moyen de réception et d'entraînement 22 comporte un axe à section transversale polygonale dont une partie est destinée à être reliée à la barre de tension B et dont l'autre partie est emprisonnée dans un élément en U destiné à recevoir la poignée 4. Selon d'autres variantes, dont deux sont représentées sur les figures 10 et 11, l'axe de rotation du moyen 22 peut avoir une section transversale circulaire et être pourvu, par exemple, d'une entaille pratiquée dans un plan comprenant l'axe de rotation du moyen 22 ou d'un perçage 225 transversal à l'axe de rotation du moyen 22. Dans le premier cas, l'extrémité correspondante de la barre de tension B doit être conformée à l'entaille pour pouvoir y être insérée lors de l'engagement de la barre de tension B avec le moyen 22. Et dans le second cas illustré, l'engagement rotatif entre la barre de tension B et le moyen 22 est assuré par une goupille passant par le perçage 225 et des trous pratiqués dans l'extrémité correspondante de la barre de tension B.

Selon encore une autre variante de réalisation, la seconde partie d'extrémité 222 du moyen de réception et d'entraînement 22 peut être prolongée par une partie s'étendant parallèlement à l'axe de rotation de la première partie d'extrémité 221 et pourvue, à son extrémité opposée à la partie 222, d'une poignée à laquelle elle est attachée par une articulation. Cette variante, qui diffère du mode de réalisation décrit plus haut principalement par l'emplacement de l'articulation, permet, par exemple, d'adapter la forme de la poignée et de la chape d'entraînement à une forme particulière d'un montant de la carrosserie du véhicule industriel auquel le dispositif de l'invention est destiné.

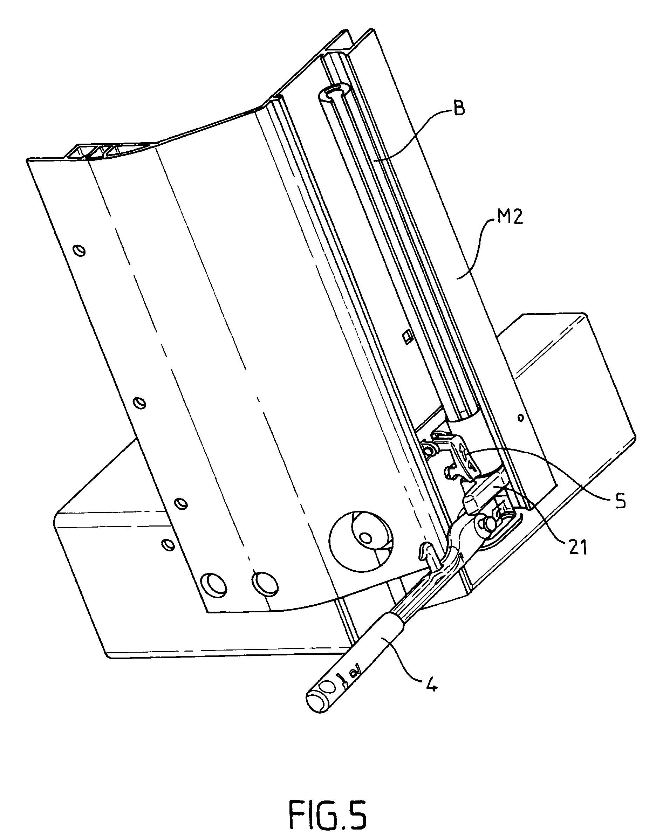

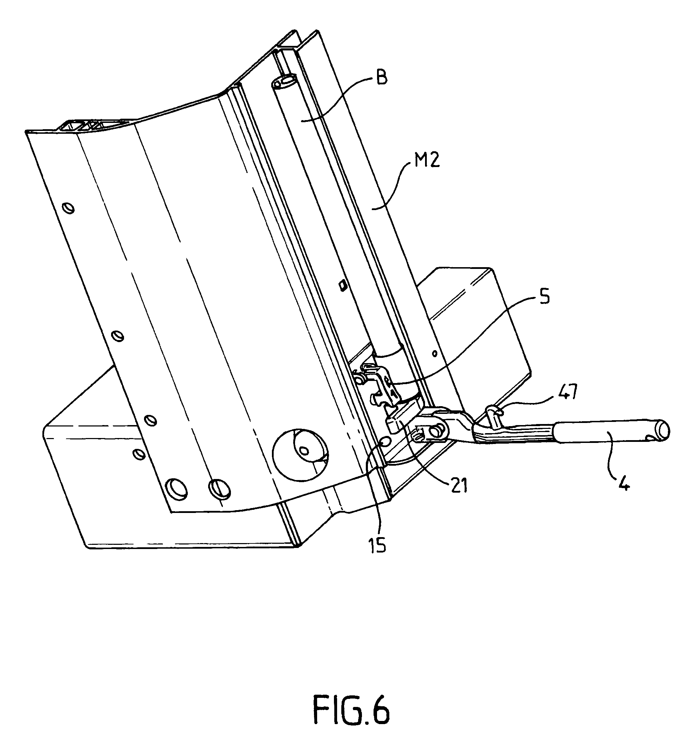

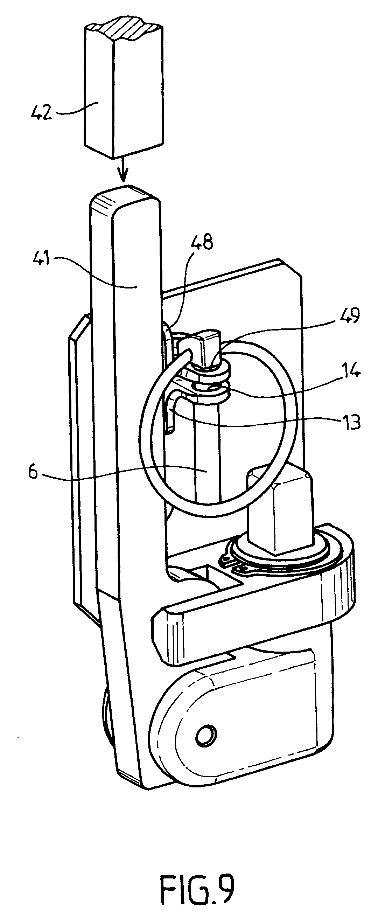

Quel que soit le mode de réalisation choisi, le moyen de réception et d'entraînement 22 est retenu sur la platine 1 par la chape 21 et peut pivoter librement entre deux positions angulaires, représentées sur les figures 5 et 6, à savoir une première position correspondant à la bâche détendue et une seconde position correspondant à une tension maximale de la bâche, comme cela est décrit plus loin. Afin de pouvoir maintenir le moyen 22, et par cela la barre de tension B, dans la seconde position le temps que la bâche doit rester tendue, la platine est pourvue de moyens de blocage 3. Ces moyens de blocage 3 peuvent avoir la forme de crans. Ainsi, la figure 8 montre la partie inférieure d'une platine 1, pourvue sur sa seconde partie 12 de deux coins 31, 32 en saillie vers la première partie 11 de la platine 1. Alors que le coin 31 constitue le cran nécessaire pour bloquer le moyen de réception et d'entraînement 22 dans sa seconde position, le coin 32 constitue un cran optionnel permettant le bloquer le moyen 22 dans sa première position et de faciliter ainsi l'engagement de la barre de tension B avec le moyen 22.

Afin de pouvoir faire pivoter le moyen de réception et d'entraînement 22, celui-ci est relié, moyennant une articulation 23, à la poignée de manoeuvre 4.

La poignée de manoeuvre 4 comprend essentiellement une première partie 41 et une seconde partie 42. L'extrémité libre de la première partie 41, référencée 43, est conformée de façon à pouvoir être reliée à la base 32 du moyen de réception et d'entraînement 22, alors que l'autre extrémité de la partie 41 est conformée de façon à pouvoir être reliée à la seconde partie 42 de la poignée 4.

Dans l'exemple de réalisation représenté sur la figure 2, la partie 41 de la poignée 4 est réalisée sous la forme d'une pièce métallique plate pourvue, sur une partie de sa longueur, d'une nervure de raidissement 44. L'extrémité 43 est reliée à la seconde partie d'extrémité 222 du moyen de réception et d'entraînement 22 par une articulation 23 dont l'axe de pivotement est perpendiculaire à l'axe de rotation du moyen 22.

La seconde partie 42 de la poignée 4, qui peut être soit solidaire de la première partie 41 soit amovible, est réalisée sous la forme d'une pièce cylindrique pourvue à son extrémité libre 45 d'un trou traversant 46 permettant le passage d'un câble de scellement douanier.

Le moyen d'arrêt 5 du dispositif de l'invention permet de maintenir la poignée de manoeuvre 4 dans une position dite de rangement, c'est-à-dire dans une position dans laquelle elle ne dépasse pas des contours de la partie du profilé du montant M2 dans laquelle est monté le dispositif. Cette position est représentée sur la figure 2. On y voit en même temps que le moyen d'arrêt 5 est avantageusement réalisé sous la forme d'un verrou.

Le verrou 5 est constitué par une pièce montée basculant sur la platine 1 et maintenue dans une position de verrouillage par un ressort 13 également monté sur la platine 1. Le verrou 5 est formé de façon à pouvoir coopérer avec un crochet 47, solidaire de la partie 41 de la poignée 4, de façon que le verrou bloque le crochet 47 lorsqu'il est dans sa position de verrouillage et libère le crochet 47, et ainsi la poignée 4, lorsque le verrou est pivoté ou basculé par un opérateur du dispositif dans une position d'ouverture du verrou. Afin de faciliter la préhension du verrou 5, celui-ci est avantageusement pourvu d'une avancée 51 destinée à faciliter la manipulation du verrou 5 par un opérateur du dispositif.

De plus, dans le mode de réalisation représenté sur les figures 2 à 7, le verrou 5 réunit en lui les fonctions de moyens de blocage 3 du moyen de réception et d'entraînement 22 et du moyen d'arrêt 5 de la poignée 4. Cette disposition est particulièrement adaptée au montage du dispositif dans un montant d'angle d'une carrosserie, comme le montant M2 représenté dans les dessins. Lorsque le moyen de réception et d'entraînement 22 est tourné de la première position, dans laquelle il a été engagé avec la barre de tension B, jusqu'à la seconde position, dans laquelle la bâche est tendue au maximum, il suffit de lever la poignée et de la mettre à la verticale pour obtenir que son crochet 47 s'encliquette dans le verrou 5 et que le verrou 5 retienne ainsi à la fois le moyen de réception et d'entraînement 22 et la poignée 4 dans leur positions respectives de tension de la bâche et de rangement. Il va sans dire que le verrou 5, pour réunir efficacement ces deux fonctions, doit être positionné, en élévation, à un niveau assez proche de celui de la première partie d'extrémité 221 du moyen de réception et d'entraînement 22.

La figure 9 montre un second mode de réalisation du dispositif de l'invention. Ce second mode diffère du premier essentiellement par le moyen d'arrêt utilisé à la fois pour arrêter la poignée de manoeuvre dans sa position de rangement et pour bloquer par ce biais le moyen de réception et d'entraînement 22 dans sa seconde position, c'est-à-dire dans la position dans laquelle la bâche est tendue au maximum.

Selon le second mode de réalisation, le moyen d'arrêt est formé essentiellement par une goupille 6 et des trous prévus à la fois sur le bras de manoeuvre 4 et la platine 1 et destinés à recevoir ensemble la goupille 6. A cet effet, la partie inférieure 41 du bras de manoeuvre 4 et la platine 1 sont formées de façon qu'un trou 49 pratiqué sur le bras 4 et un trou 14 pratiqué sur la platine 1 sont disposés coaxialement l'un par rapport à l'autre, lorsque le bras 4 est dans sa position de rangement. Avantageusement, la partie inférieure 41 du bras de manoeuvre 4 est pourvue d'une pièce rapportée 48 ayant la forme d'une équerre avec deux ailes s'étendant dans des plans perpendiculaires l'un par rapport à l'autre. Alors qu'une des deux ailes sert à la fixation, par exemple par soudage, de la pièce 48 sur la partie inférieure 41 du bras 4, l'autre aile est pourvue du trou 49. De manière analogue, la platine 1 est pourvue d'une pièce rapportée 13 ayant la forme d'une équerre avec deux ailes s'étendant dans des plans perpendiculaires l'un par rapport à l'autre. Alors qu'une des deux ailes sert à la fixation, par exemple par soudage, de la pièce 13 sur la platine 1, l'autre aile est pourvue du trou 14. Il va sans dire que, en variante du second mode de réalisation représenté sur les dessins, le bras 4 et la platine 1 peuvent être formés chacun en une seule pièce avec la partie correspondante perforée 13 ou 48 portant respectivement le trou 14 ou le trou 49.

Les différentes pièces constituant le dispositif de l'invention sont formées et assemblées de façon que le dispositif puisse tenir entièrement à l'intérieur d'un profilé formant le montant M2, lorsque la poignée 4 est rangée à l'intérieur du montant M2, qu'une barre de tension B soit engagée sur le moyen de réception 3 ou non.

Les principales étapes d'une manoeuvre du dispositif de l'invention pour respectivement tendre ou détendre une bâche sont maintenant décrites en regard aux figures 3 à 7.

La figure 3 représente le dispositif dans une position où une bâche non représentée est tendue moyennant la barre de tension B engagée avec le dispositif de l'invention. La poignée 4 est rangée à l'intérieur de la partie correspondante du profilé formant le montant M2 et est retenue dans cette position moyennant le verrou 5 agissant sur la poignée 4 moyennant son crochet 47. En même temps, le verrou 5 bloque le moyen de réception et d'entraînement 22, et ainsi la barre de tension B, dans une position angulaire autour de l'axe longitudinal de la barre de tension B et de l'axe de rotation du moyen 22, dans laquelle la bâche est tendue. Cette position du moyen de réception et d'entraînement 22 a été désignée dans l'introduction de la présente description de l'invention comme la seconde position, par opposition à une première position de ce moyen 22 dans laquelle la bâche est détendue et la barre de tension B peut être engagée avec le, ou dégagée du, moyen de réception et d'entraînement 22.

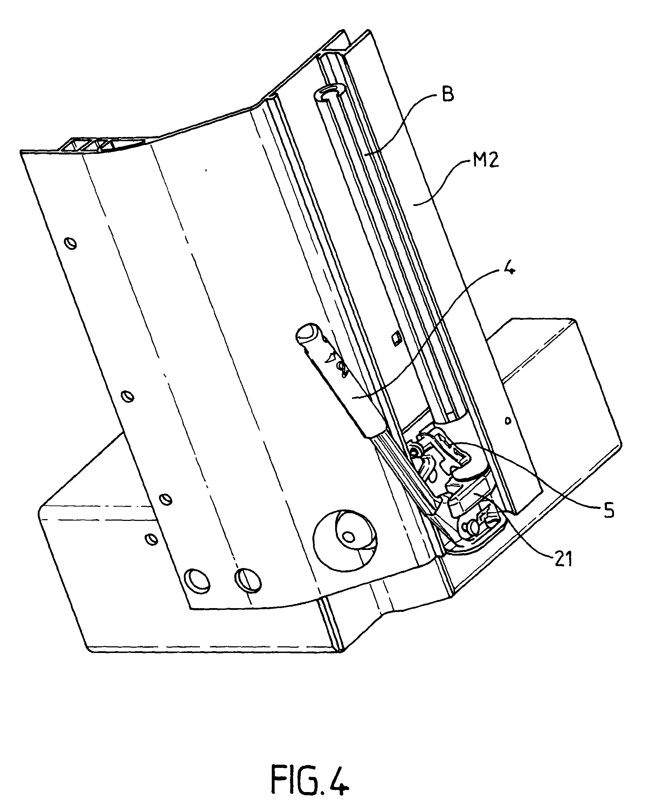

Pour détendre la bâche, un opérateur du dispositif de l'invention bascule le verrou 5 de manière à libérer la poignée 4. Lorsque la poignée 4 est libérée, elle peut être descendue vers une position horizontale comme cela est représenté successivement sur les figures 4 et 5. Lorsque la poignée 4 se trouve dans une position horizontale, elle est tournée ou pivotée d'un quart de tour, autour de l'axe de rotation du moyen 22, amenant avec lui en rotation la barre de tension B, jusqu'à une position dans laquelle la bâche est détendue. Lorsque la bâche est détendue, la barre de tension B est dégagée du dispositif de l'invention afin que la bâche puisse être mue de façon à ouvrir la paroi souple que cette bâche constitue.

Lorsqu'il s'agit de tendre une bâche, les étapes décrites ci-avant et représentées sur les figures 3 à 7 sont effectuées dans l'ordre inverse des figures, c'est-à-dire de la figure 7 à 3. Ainsi, on engage une barre de tension B dans le moyen de réception et d'entraînement 22 du dispositif de l'invention après avoir mis la poignée 4 dans la position représentée sur la figure 7. Ensuite, on tourne la poignée 4 d'un quart de tour vers la gauche (sur les figures) afin qu'elle atteigne la position représentée sur la figure 5 et on soulève la poignée comme représentée successivement sur les figures 4 et 3 jusqu'à ce que le crochet 47 de la poignée 4 s'encliquette dans le verrou 5.

## Revendications

1. Dispositif pour tendre une bâche d'un véhicule industriel comportant une carrosserie, la bâche ayant deux bords parallèles opposés dont au moins un est pourvu d'une barre de tension, ainsi qu'un véhicule industriel comportant un tel dispositif,
le dispositif comprend:
• une platine (1) destinée à la fixation du dispositif sur la carrosserie,
• un système d'entraînement (2) comportant:
- une chape (21) fixée sur la platine (1),
- un moyen de réception et d'entraînement (22) de la barre de tension (B) supporté à rotation par la chape (21) et ayant une première partie d'extrémité (221) destinée à être engagée avec la barre de tension (B) et une seconde partie d'extrémité (222), opposée à la première partie d'extrémité (221),
- une poignée de manoeuvre (4) reliée à la seconde partie d'extrémité (222) du moyen de réception et d'entraînement (22) de la barre de tension (B) au moyen d'une articulation (23)
- et des moyens de blocage (3, 5) fixé sur la platine (1) et permettant de bloquer le moyen de réception et d'entraînement (22) de la barre de tension (B) dans au moins une position,
la poignée (4) pouvant être manoeuvrée de façon à faire pivoter conjointement le moyen de réception et d'entraînement (22) et la barre de tension (B), lorsque ceux-ci sont engagés l'un dans l'autre, depuis une première position correspondant à la bâche détendue jusqu'à une seconde position correspondant à une tension maximale de la bâche et vice versa.

2. Dispositif selon la revendication 1, **caractérisé en ce que** la poignée de manoeuvre (4) est pourvue d'un moyen d'ancrage (47) conformé de façon que la poignée de manoeuvre (4) puisse être bloquée par des moyens de blocage (3, 5) dans une position de rangement, lorsque le moyen de réception et d'entraînement (22) de la barre de tension (B) est dans sa seconde position.

3. Dispositif selon la revendication 1 ou 2, **caractérisé en ce que** la poignée de manoeuvre (4) est pourvue d'un perçage (46) par lequel peut être passé un câble de scellement.

4. Dispositif selon l'une quelconque des revendications précédentes, **caractérisé en ce que** la platine (1) est formée de façon à pouvoir être enchâssée dans une partie appropriée d'un montant ou d'un autre profilé de la carrosserie.

5. Dispositif selon l'une quelconque des revendications précédentes, **caractérisé en ce que** la platine (1) est pourvue d'au moins un orifice (15) permettant sa fixation sur la carrosserie.

6. Dispositif selon l'une quelconque des revendications précédentes, **caractérisé en ce que** le moyen de réception et d'entraînement (22) destiné à recevoir une barre de tension (B) attachée à, ou enfilée dans, un bord correspondant de la bâche à tendre comprend une partie d'extrémité (221) ayant au moins partiellement une section transversale carrée.

7. Dispositif selon l'une quelconque des revendications précédentes, **caractérisé en ce que** le verrou (5) est constitué par une pièce montée basculant ou pivotant autour d'un axe et agissant sous la contrainte d'un ressort (13).

8. Véhicule industriel ayant une carrosserie avec au moins une paroi souple formée par une bâche destinée à être ouverte et fermée, **caractérisé en ce qu'**il comprend au moins un dispositif selon l'une quelconque des revendications 1 à 7 pour tendre cette bâche.

9. Véhicule industriel selon la revendication 8, **caractérisé en ce que** chaque bâche formant une paroi souple est tendue par un seul dispositif selon l'une quelconque des revendications 1 à 7.
